(19) Europäisches Patentamt
European Patent Office
Office européen des brevets

(11) Publication number: **0 058 081**
**B1**

# (12) EUROPEAN PATENT SPECIFICATION

(45) Date of publication of patent specification: **23.04.86**

(51) Int. Cl.[4]: **G 11 B 5/09**

(21) Application number: **82300624.2**

(22) Date of filing: **09.02.82**

## (54) Methods and apparatus for encoding binary data.

(30) Priority: **09.02.81 JP 17734/81**

(43) Date of publication of application:
**18.08.82 Bulletin 82/33**

(45) Publication of the grant of the patent:
**23.04.86 Bulletin 86/17**

(84) Designated Contracting States:
**DE FR GB NL**

(56) References cited:
**DE-A-2 828 219**
**FR-A-2 455 401**
**GB-A-2 067 055**
**US-A-4 027 335**

**Patent Abstracts of Japan, vol. 3, no. 150, 11 December 1979, page 159E158**
**Patent Abstracts of Japan, vol. 5, no. 9, 21 January 1981**

(73) Proprietor: **SONY CORPORATION**
**7-35 Kitashinagawa 6-chome Shinagawa-ku**
**Tokyo 141 (JP)**

(72) Inventor: **Odaka, Kentaro**
**3245-1-307 Noborido Tama-ku**
**Kawasaki-shi Kanagawa-ken (JP)**

(74) Representative: **Thomas, Christopher Hugo et al**
**D Young & Co 10 Staple Inn**
**London WC1V 7RD (GB)**

**EP 0 058 081 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to methods and apparatus for encoding binary data, and suitable for use, for example, in digital signal recording.

Digital signal recording of binary data makes use, for example, of variations in residual magnetization of a magnetic recording medium or variations in geometrical shapes formed in a recording medium of disc shape, and has the features that a great deal of information can be recorded with high density and permanence. In order to produce the variations in residual magnetization or variations in geometrical shape, it is required to generate a recording signal, for example, a recording current, in the form of a rectangular pulse train having a waveform which varies in response to the binary data. It is therefore necessary to encode the binary data using a predetermined coding system to produce encoded binary digits, and then to modulate the encoded binary digits using a predetermined form of modulation to obtain the recording signal.

Various modulation systems have been proposed for this purpose and non-return to zero, inverted (NRZI) modulation is one of them. In brief, NRZI modulation is a modulation system in which the level of the recording signal is inverted at each binary digit "1" and is not inverted at each binary digit "0", to provide two different levels of the recording signal.

In the waveform of the recording signal obtained by NRZI modulation or the like, the minimum interval between two successive level inversions is called the minimum run length, Tmin, and this exercises an important effect upon recording characteristics. This is because the inversions in magnetization or the variations in geometrical shape are made in the recording signal and, in the reproducing process, reproduced pulses are obtained in response to reading of the inversions in magnetization or the variations in geometrical shape, and distortions in the waveform of the reproduced pulses are caused by mutual interference between successive reproduced pulses. Such distortions increase when the interval between two successive level inversions in the waveform of the recording signal is short. Such increased distortions in the waveform of the reproduced pulses may result in errors in conversion of the reproduced pulses to binary digits. Accordingly, the minimum run length Tmin is desired to be relatively long.

On the other hand, the maximum interval between two successive level inversions in the waveform of the recording signal is called the maximum run length, Tmax, and this affects the ease of self-clocking in the reproducing process. That is, since reproduced pulses are not obtained during a period corresponding to the maximum run length Tmax, it is impossible to produce a clock signal directly from the reproduced pulses during the period corresponding to the maximum run length Tmax and this results in difficulty in self-clocking. Accordingly, the maximum run length Tmax is desired to be relatively short.

A problem also arises if the level of the waveform of the recording signal, which is a rectangular pulse train having a positive level and a negative level, is unbalanced towards one of the positive and negative levels over a relatively long period. Thus, if a minimum pulse width of the positive rectangular pulse is represented as +1; a pulse width which is X times as long as the minimum pulse width of the positive rectangular pulse is represented as +X; a minimum pulse width of the negative rectangular pulse is represented as −1; and a pulse width which is X times as long as the minimum pulse width of the negative rectangular pulse is represented as −X, and if the sum of such representations during the relatively long period has a significant positive or negative value, then the waveform of the recording signal contains a DC component in its frequency spectrum. The waveform of the recording signal which contains such a DC component is undesirably distorted in transmission, because the recording signal and reproduced signal are generally transmitted through AC coupling elements, Moreover, in such a case, even if it is intended to reproduce the same waveform as the original waveform of the recording signal in the reproducing process, it is impossible to recover the DC component which has been lost at the AC coupling elements. Accordingly, the waveform of the recording signal is desired not to contain the DC component.

When NRZI modulation is used, since the level inversions in the waveform of the recording signal are caused at every binary digit "1" in the encoded binary digits, the minimum run length Tmin, the maximum run length Tmax, and whether or not the waveform of the recording signal contains a DC component, are determined by the manner of appearance of the binary digit "1" in the encoded binary digits. Various systems for obtaining encoded binary digits representing binary data to be NRZI modulated have been previously proposed. For example, a system of converting every three digits of the binary data to six encoded binary digits as a unit block of the whole encoded binary digits has been already proposed as a system in which a relatively long minimum run length Tmin can be obtained. See, for example, US patent specification US—A—4 323 931. In this system the minimum run length Tmin has a period corresponding to one and a half cycles of the binary digit. However, there is the disadvantage that the waveform of the recording signal formed by NRZI modulating the encoded binary digits obtained in accordance with this system contains a DC component.

Another system which is so designed that the waveform of the recording signal formed by NRZI modulating the encoded binary digit does not contain a DC component has also been proposed. See, for example, US—A—4 027 335. However, in this case, there is the disadvantage that the

minimum run length Tmin cannot be more than the period corresponding to one cycle of the binary digit.

Thus, none of the previously proposed systems satisfies both requirements that a relatively long minimum run length is obtained and the waveform of the recording signal formed by the NRZI modulation does not contain a DC component. Incidentally, with regard to the maximum run length Tmax, even if it is relatively long, this is not such a serious problem, because it is possible accurately to generate the required clock pulses by use of a phase locked loop circuit or the like in the reproducing apparatus.

According to the present invention there is provided a method of encoding binary data to produce a sequence of encoded binary digits which is then NRZI modulated, the method including the steps of:

encoding the binary data to produce encoded binary digits by treating each segment of a first predetermined number of successive digits of said binary data as a unit and converting each said unit into a second predetermined number of encoded binary digits so that the minimum run length in the waveform of a signal obtained in the case where the encoded binary digits are NRZI modulated is greater than that in the waveform of a signal obtained in the case where the binary data are NRZI modulated; and NRZI modulating the produced sequence of encoded binary digits; characterised by:

arranging said encoded binary digits to form a sequence of binary digit blocks, each of which consists of a plurality of encoded binary digits, with an interval corresponding to a third predetermined number of binary digits between each successive two of said binary digit blocks; and

inserting a redundant code consisting of said third predetermined number of binary digits in each said interval in the sequence of binary digit blocks to complete said sequence of encoded binary digits, said redundant code being selected in dependence on at least the contents of said binary digit block immediately preceding said redundant code and so that the minimum run length in the waveform of a signal obtained by NRZI modulating the completed sequence of encoded binary digits is not reduced compared with the minimum run length in the waveform of a signal obtained by NRZI modulating the encoded binary digits without the redundant code, and the DC component in the waveform of the signal obtained by NRZI modulating said completed sequence of encoded binary digits is at least reduced when said redundant code is inserted in said interval.

According to the present invention there is also provided an apparatus for encoding binary data to produce a sequence of encoded binary digits which is then NRZI modulated, the apparatus comprising:

means for encoding the binary data to produce encoded binary digits by treating each segment of a first predetermined number of successive digits of said binary data as a unit and converting each said unit into a second predetermined number of encoded binary digits so that the minimum run length in the waveform of a signal obtained in the case where the encoded binary digits are NRZI modulated is greater than that in the waveform of a signal obtained in the case where the binary data are NRZI modulated; and

means for NRZI modulating the produced sequence of encoded binary digits;

characterised by:

means for arranging said encoded binary digits to form a sequence of binary digit blocks, each of which consists of a plurality of encoded binary digits, with an interval corresponding to a third predetermined number of binary digits between each successive two of said binary digit blocks;

redundant code generating means for producing various redundant codes, each of which consists of said third predetermined number of binary digits, and for providing one of said redundant codes, which is to be inserted in said interval in the sequence of binary digit blocks, said one of said redundant codes being selected in dependence on at least the contents of said binary digit block immediately preceding said redundant code and so as not to reduce the minimum run length in the waveform of a signal obtained by NRZI modulating the completed sequence of binary digit blocks with said one of said redundant codes inserted therein in comparison with the minimum run length in the waveform of a signal obtained by NRZI modulating the encoded binary digits without said one of said redundant codes; and

adding means for inserting said one of said redundant codes in said interval in the sequence of binary digit blocks to produce said completed sequence of encoded binary digits, whereby the DC component in the waveform of a signal obtained by NRZI modulating said completed sequence of encoded binary digits is at least reduced.

The invention will now be described by way of example with reference to the accompanying drawings, in which:

Figure 1 is an illustration showing a sequence of data binary digits, two sequences of encoded binary digits, and two waveforms used for explanation of the concept of the invention;

Figure 2 is a table showing the relation of a redundant code to encoded binary digits (bits) and used for explanation of the concept of the invention;

Figure 3 is a block diagram showing one embodiment of apparatus for encoding binary data and according to the invention; and

Figure 4 is an illustration showing the waveforms of timing signals used in the apparatus of Figure 3.

First the concept of the invention will be explained. When binary data having a cycle of binary digits (bits) represented as T, as shown at (a) in Figure 1, is encoded, each three digits of the binary data are treated as a unit and converted to

six encoded binary digits so as to produce a sequence of encoded binary digits shown at (b) in Figure 1. This sequence of encoded binary digits shown at (b) in Figure 1 is a mere example. A recording signal having the waveform shown at (c) in Figure 1 is obtained by modulating the sequence of encoded binary digits shown at (b) in Figure 1 using NRZI modulation, wherein the minimum run length Tmin is 1.5 T and the maximum run length Tmax is 4.5 T. This means that in the sequence of encoded binary digits shown at (b) in Figure 1, the minimum interval between two successive binary digits "1" is three digit periods, and therefore there are at least two binary digits "0" between one binary digit "1" and the next binary digit "1". The maximum interval between two successive binary digits "1" is nine digit periods and therefore there are less than nine binary digits "0" between one binary digit "1" and the next binary digit "1". This minimum run length Tmin of 1.5 T is of desirable value. However, the waveform of the recording signal shown at (c) in Figure 1 contains a DC component.

In accordance with the invention, the sequence of encoded binary digits shown at (b) in Figure 1 is obtained in the form of a sequence of blocks, each of which is represented as Bn as shown at (d) in Figure 1 and consists of n digits, with an interval corresponding to three digit periods between each successive two blocks. Between each two successive blocks, in general, between the Nth (N is in integer) block and the N+1th block, namely, the next block, a redundant code J consisting of three redundant binary digits is inserted.

The redundant code J is inserted for the main purpose of removing or at least substantially reducing the DC component in the waveform of the recording signal. Accordingly, for example, in the case where a level inversion in the waveform of the recording signal does not arise between the positions corresponding to the Nth and N+1th blocks and the waveform of the recording signal contains a DC component, such as shown at (c) in Figure 1, the redundant code J is inserted in order to cause a level inversion in the waveform of the recording signal between the Nth and N+1th blocks, so that the DC component is removed or reduced.

However, there is a situation where level inversion in the waveform of the recording signal is not desired between the Nth and N+1th blocks, and in this case the redundant code J inserted between the Nth and N+1th blocks must not cause level inversion in the waveform of the recording signal. Consequently, the redundant code J is so selected as to include a binary digit "1" when level inversion in the waveform of the recording signal is required and not to include a binary digit "1" when level inversion in the waveform of the recording signal is not required.

Moreover, the redundant code J is so selected that the minimum run length Tmin is not varied with the insertion thereof. For example, in this embodiment since the minimum run length Tmin is 1.5 T and therefore there are at least two binary digits "0" between each two successive binary digits "1", the redundant code J is so selected that there are always at least two binary digits "0" between two successive binary digits "1" after it is inserted. For realizing this, the contents of the redundant code J are determined in accordance with the values of the last two digits in the Nth block. Figure 2 shows the selection of the redundant code.

If it is required to cause level inversion in the waveform of the recording signal between the Nth and N+1th blocks, then since the last two digits in the Nth block, namely two advanced digits F which occur just before the redundant code J after the insertion thereof can be 0 0, 0 1 or 1 0, the redundant code J is arranged to be 1 0 0 when the two digits F are 0 0; to be 0 0 1 when the two digits F are 0 1; and to be 0 1 0 when the two digits F are 1 0. As a result of this, there are always at least two binary digits "0" between two successive binary digits "1" at the boundary between the two digits F and the redundant code J and the boundary between the redundant code J and the digits in the N+1th block, and moreover level inversion in the waveform of the recording signal occurs at the position corresponding to the binary digit "1" contained in the redundant code J.

On the contrary, if it is not required to cause level inversion in the waveform of the recording signal between the Nth and N+1th blocks, the redundant code J is arranged always to be 0 0 0 regardless of the values of the two digits F, because the redundant code J must not include the binary digit "1". With the insertion of a redundant code J selected as described above, the minimum run length Tmin is maintained at 1.5 T and the level inversion required in the waveform of the recording signal between the Nth and N+1th blocks is achieved. This results in the DC component in the waveform of the recording signal being removed or substantially reduced.

One embodiment of the apparatus for encoding binary data and according to the present invention, in which the dividing of the encoded binary digits into the blocks each of which consists of a digits, the decision whether level inversion in the waveform of the recording signal is necessary or not, the selection of the redundant code, the insertion of the selected redundant code and so on as described above are carried out, is shown in Figure 3 to which reference is now made.

The binary data as shown at (a) in Figure 1 is supplied to an input terminal 1. In a modulator 2 each three digits of the binary data supplied to the input terminal 1 are treated as a unit and converted to six encoded binary digits to produce the sequence of encoded binary digits. The sequence of encoded binary digits is derived from the modulator 2 in the form of the sequence of blocks, each of which consists of n digits, as

shown at (d) in Figure 1. Between each two blocks, a time interval (redundant code insertion interval) Tj where the redundant code J will later be inserted is provided. The sequence of blocks is delayed by a delay circuit 3. The delay time of the delay circuit 3 is selected to correspond to the sum of the period of n digits in the sequence of encoded binary digits and the redundant code insertion interval Tj. The output of the delay circuit 3 is supplied to one input terminal of a code adder 4. The code adder 4 is also supplied with the redundant code J from the other input terminal thereof and inserts the redundant code J between each two successive blocks in the output from the delay circuit 3 to produce the final sequence of encoded binary digits. The sequence of encoded binary digits so obtained is derived from an output terminal 5 to be NRZI modulated.

A first digital integrator 6 counts +1 (or −1) when one binary digit "1" is supplied and continues to count +1 (or −1) at every digit and accumulates them until the next binary digit "1" arrives, and when the next binary digit "1" arrives, continues to count −1 (or +1) and accumulates them until the further next binary digit "1" arrives. This operation in the first digital integrator 6 is done repeatedly. The sequence of encoded binary digits from the output terminal of the code adder 4 is supplied to the first digital integrator 6 and the digital accumulation is performed continously therein.

A second digital integrator 7 performs digital accumulation similar to the digital accumulation performed in the first digital integrator 6 and, in addition, clears the accumulated result between the arrival of the digit of the number n and the arrival of the digit of the number n+1. In other words, the second digital integrator 7 starts a new digital accumulation at the arrival of every n+1th digit. To the second digital integrator 7 is supplied the output of the modulator 2 and the digital accumulation is done in every block in the sequence of encoded binary digits.

When the result of digital accumulation up to the end of the Nth block in the output of the code adder 4 is obtained in the first digital integrator 6, the result of digital accumulation in the N+1th block in the output of the modulator 2 is obtained in the second digital integrator 7. The results of these digital accumulations are supplied to a gate 8 and a gate 9, respectively. Both the gates 8 and 9 become ON at a time point $t_o$ at the end of the Nth block in the output of the code adder 4, namely, the end of the N+1th block in the output of the modulator 2 to derive the results of digital accumulations obtained in the first and second digital integrators 6 and 7, respectively, in the form of "1" when they are positive or in the form of "0" when they are negative, and supply them to an exclusive OR circuit 10. Accordingly, the output of the exclusive OR circuit 10 becomes "0" when both of the results of digital accumulations in the first and second digital integrators 6 and 7 at the time point $t_o$ are positive or negative, and becomes "1" when one of them is positive and the other of them is negative.

The fact that both of the digital accumulations in the first and second digital integrator 6 and 7 at the time point $t_o$ are positive or negative means that the waveform of the recording signal produced up to the Nth block in the output of the code adder 4 contains a DC component of positive or negative polarity, and the waveform of the recording signal in only the N+1th block also contains a DC component of the same polarity. Therefore if the waveform of the recording signal produced in the N+1th block were added to the waveform of the recording signal produced up to the Nth block without level inversion, the DC component in the waveform of the recording signal would increase. In this case, the DC component can be removed or at least reduced by adding the waveform of the recording signal produced in the N+1th block after level inversion thereof. That is, level inversion in the waveform of the recording signal is required between the Nth and Nth+1th blocks.

If one of the results of the digital accumulations in the first and second digital integrators 6 and 7 at the time point $t_o$ is positive and the other is negative, this means that the DC components contained in the waveform of the recording signal produced up to the Nth block and the waveform of the recording signal produced in only the N+1th block are opposite in polarity to each other, and therefore if the waveform of the recording signal produced in the N+1th block is added to the waveform of the recording signal produced up to the Nth block without level inversion, the DC component in the recording signal will be removed or at least reduced. That is, the level inversion in the waveform of the recording signal is not required between the Nth and N+1th blocks. Consequently, the output of the exclusive OR circuit 10 indicates by "0" that level inversion in the waveform of the recording signal is required between the Nth and N+1th blocks, and indicates by "1" that level inversion in the waveform of the recording signal is not required between the Nth and N+1th block.

In view of the above, it is understood that the first and second digital integrators 6 and 7, the gates 8 and 9, and the exclusive OR circuit 10 form a circuit for judging whether level inversion is required or not. The output of the exclusive OR circuit 10 is supplied to a redundant code generator 11 at the time point $t_o$.

The output of the delay circuit 3 is also supplied to a two-bit decoder 12. The two-bit decoder 12 generates an output in the form of two digits 0 0, 0 1 or 1 0 according to the last two digits in the Nth block, namely, the advanced two digits F in the output of the delay circuit 3, and supplies it to the redundant code generator 11. The redundant code generator 11 holds the output of the two-bit decoder 12 and generates four kinds of sequences of three binary digits 1 0 0, 0 0 1, 0 1 0 and 0 0 0 selectively to be supplied to the code adder 4. In

the redundant code generator 11, the operation expressed by the logical equation

$$I=A\,.\,H+\bar{A}\,.\,(B\,.\,H+C\,.\,F+D\,.\,G),$$

wherein A is the output of "1" of the exclusive OR circuit 10; $\bar{A}$ is the output "0" of the exclusive OR circuit; 10; B, C and D are the outputs of 0 0, 0 1 and 1 0 of the two-bit decoder 12, respectively; E, F, G and H are the sequences of three binary digits 1 0 0, 0 0 1, 0 1 0 and 0 0 0 generated in the redundant code generator 11, respectively; and I is the output of the redundant code generator 11, is performed. As a result, of this, the redundant code J selected as shown on the table in Figure 2 is generated to be supplied to the code adder 4 and inserted between the Nth block and the N+1th block in the output of the delay circuit 3 at the code adder 4.

A timing signal generator 13 controls each of the above-mentioned circuits, and generates five kinds of timing signals $P_1$, $P_2$, $P_3$, $P_4$ and $P_5$ as shown in Figure 4. For example, the timing signal $P_1$ is "0" between each block in the output of the modulator 2, namely, at the redundant code insertion interval Tj, and is "1" in the interval $T_b$ of each of the blocks. The timing signal $P_2$ is "1" always. The timing signal $P_3$ is a narrow pulse rising up to "1" at the front edge of the redundant code insertion interval Tj. The timing signal $P_4$ is "1" in the period of the last two digits in each of the blocks, namely, the two digits F and is "0" during other intervals. The timing signal $P_5$ is "1" at the redundant code inserting interval Tj and "0" at the interval $T_b$ of each of the blocks. When each of these timing signals is "1", each of the above-mentioned circuits performs a predetermined operation. The timing signals $P_1$, $P_2$, $P_3$, $P_4$ and $P_5$ are supplied to the modulator 2 and the second digital integrator 7, to the first digital integrator 6, to the gates 8 and 9, to the two-bit decoder 12 and to the code adder 4 and the redundant code generator 11, respectively. The code adder 4 is arranged to transmit the output of the delay circuit 3 to the output terminal 5 when the timing signal $P_5$ supplied thereto is "0" and to transmit the redundant code J supplied thereto from the redundant code generator 11 to the output terminal 5 when the timing signal $P_5$ is "1".

As apparent from the above description, by adding the selected redundant code to the encoded binary digits, a sequence of binary digits which produces a recording signal with a waveform which has a relatively long minimum run length and does not contain any significant DC component, when it is NRZI modulated, can be obtained. In information recording with such a recording signal errors in conversion of a reproduced signal to a binary digit signal can be avoided so that high data density recording can be achieved, and the recording signal can be free from distortions in its waveform caused by the AC coupling elements. The redundant code is of course eliminated in the reproducing process to reproduce the original binary data.

In the embodiment described above, although the minimum run length Tmin is not varied by the addition of the redundant code consisting of three digits, it is possible for the maximum run length Tmax to elongate by less than four digits. In view of this, the redundant code may alternatively be formed with, for example, six digits which are selected in response to the contents of the two blocks between which the redundant code is inserted so that neither the minimum run length Tmin nor the maximum run length Tmax are varied by the addition of the redundant code.

**Claims**

1. A method of encoding binary data to produce a sequence of encoded binary digits which is then NRZI modulated, the method including the steps of:

encoding the binary data (Figure 1(a)) to produce encoded binary digits (Figure 1(b)) by treating each segment of a first predetermined number of successive digits of said binary data as a unit and converting each said unit into a second predetermined number of encoded binary digits so that the minimum run length in the waveform of a signal obtained in the case where the encoded binary digits are NRZI modulated is greater than that in the waveform of a signal obtained in the case where the binary data are NRZI modulated; and

NRZI modulating the produced sequence of encoded binary digits;

characterised by:

arranging said encoded binary digits to form a sequence of binary digit blocks, each of which consists of a plurality of encoded binary digity, with an interval corresponding to a third predetermined number of binary digits between each successive two of said binary digit blocks; and

inserting a redundant code (J) consisting of said third predetermined number of binary digits in each said interval in the sequence of binary digit blocks to complete said sequence of encoded binary digits, said redundant code being selected in dependence on at least the contents of said binary digit block immediately preceding said redundant code and so that the minimum run length in the waveform of a signal (Figure 1(e)) obtained by NRZI modulating the completed sequence of encoded binary digits is not reduced compared with the minimum run length in the waveform of a signal obtained by NRZI modulating the encoded binary digits without the redundant code, and the DC component in the waveform of the signal obtained by NRZI modulating said completed sequence of encoded binary digits is at least reduced when said redundant code is inserted in said interval.

2. A method according to claim 1 wherein said encoding comprises treating each three digits of said binary data as a unit and converting each said unit into six encoded binary digits.

3. A method according to claim 2 wherein said minimum run length is 1.5 T, where T is the cycle

time of two binary digits of said encoded binary digits, and said third predetermined number is three.

4. A method according to claim 3 wherein said redundant code is 1 0 0, 0 0 1 or 0 1 0, when the final two binary digits of the block immediately preceding said redundant code are 0 0, 0 1 or 1 0 respectively, and level inversion in said redundant code is required for the purpose of at least reducing said DC component; and said redundant code is 0 0 0 when level inversion in said redundant code is not required.

5. A method according to claim 2 wherein said minimum run length is 1.5 T, where T is the cycle time of two binary digits of said encoded binary digits, the maximum run length is 4.5 T, and said third predetermined number is six.

6. An apparatus for encoding binary data to produce a sequence of encoded binary digits which is then NRZI modulated, the apparatus comprising:

means (2) for encoding the binary data to produce encoded binary digits by treating each segment of a first predetermined number of successive digits of said binary data as a unit and converting each said unit into a second predetermined number of encoded binary digits so that the minimum run length in the waveform of a signal obtained in the case where the encoded binary digits are NRZI modulated is greater than that in the waveform of a signal obtained in the case where the binary data are NRZI modulated; and

means for NRZI modulating the produced sequence of encoded binary digits;

characterised by:

means for arranging said encoded binary digits to form a sequence of binary digit blocks, each of which consists of a plurality of encoded binary digits, with an interval corresponding to a third predetermined number of binary digits between each successive two of said binary digit blocks;

redundant code generating means (11) for producing various redundant codes, each of which consists of said third predetermined number of binary digits, and for providing one of said redundant codes, which is to be inserted in said interval in the sequence of binary digit blocks, said one of said redundant codes being selected in dependence on at least the contents of said binary digit block immediately preceding said redundant code and so as not to reduce the minimum run length in the waveform of a signal obtained by NRZI modulating the completed sequence of binary digit blocks with said one of said redundant codes inserted therein in comparison with the minimum run length in the waveform of a signal obtained by NRZI modulating the encoded binary digits without said one of said redundant codes; and

adding means (4) for inserting said one of said redundant codes in said interval in the sequence of binary digit blocks to produce said completed sequence of encoded binary digits, whereby the DC component in the waveform of a signal obtained by NRZI modulating said completed sequence of encoded binary digits is at least reduced.

**Revendications**

1. Procédé de codage de données binaires permettant de produire une séquence de chiffres binaires codés que l'on module ensuite par le système NRZI, le procédé comportant les opérations suivantes:

coder les données binaires (figure 1 (a)) afin de produire des chiffres binaires codés (figure 1 (b)) en traitant chaque segment d'un premier nombre prédéterminé de chiffres successifs desdites données binaires comme une unité et en transformant chaque dite unité en un deuxième nombre prédéterminé de chiffres binaires codés de sorte que la longueur de course minimale de la forme d'onde d'un signal obtenu dans le cas où les chiffres binaires codés sont modulés en NRZI soit plus grande que celle de la forme d'onde d'un signal obtenu dans le cas où les données binaires sont modulées en NRZI; et

moduler en NRZI la séquence produite de chiffres binaires codés;

caractérisé en ce qu'il comporte les opérations suivantes:

concevoir lesdits chiffres binaires codés de façon à former une séquence de blocs de chiffres binaires constitués chacun de plusieurs chiffres binaires codés, avec un intervalle correspondant à un troisième nombre prédéterminé de chiffres binaires entre deux successifs desdits blocs de chiffres binaires; et

insérer un code redondant (J) constitué dudit troisième nombre prédéterminé de chiffres binaires de chaque dit intervalle de la séquence de blocs de chiffres binaires afin de compléter ladite séquence de chiffres binaires codés, ledit code redondant étant choisi au moins en fonction du contenu dudit bloc de chiffres binaires précédant immédiatement ledit code redondant et de sorte que la longueur de course minmale de la forme d'onde d'un signal (figure 1 (e)) obtenu par modulation NRZI de la séquence complétée de chiffres binaires codés n'est pas réduite par comparaison avec la longueur de course minimale de la forme d'onde d'un signal obtenu par modulation NRZI des chiffres binaires codés en l'absence du code redondant, et que la composante de courant continu de la forme d'onde du signal obtenu par modulation NRZI de ladite séquence complétée de chiffres binaires codés soit au moins réduite lorsque ledit code redondant a été insére dans ledit intervalle.

2. Procédé selon la revendication 1, où ledit codage consiste à traiter chaque groupe de trois chiffres desdites données binaires comme une unité et à transformer chaque dite unité en six chiffres binaires codés.

3. Procédé selon la revendication 2, où ladite longueur de course minimale vaut 1,5 T, ou T est la durée de cycle de deux chiffres binaires desdits

chiffres binaires codés, et ledit troisième nombre prédéterminé est trois.

4. Procédé selon la revendication 3, où ledit code redondant vaut 100, 001 ou 010 lorsque les deux chiffres binaires finals du bloc précédant immédiatement ledit code redondant sont respectivement 00, 01 ou 10, et que l'inversion de niveau dans ledit code redondant est nécessaire pour au moins réduire ladite composante de courant continu, et en ce que ledit code redondant vaut 000 lorsque l'inversion de niveau dans ledit code redondant n'est pas nécessaire.

5. Procédé selon la revendication 2, où ladite longueur de course minimale vaut 1,5 T où T est la durée de cycle de deux chiffres binaires desdits chiffres binaires codés, la longueur de course maximale vaut 4,5 T, et ledit troisième nombre prédéterminé est six.

6. Appareil de codage de données binaires permettant de produire une séquence de chiffres binaires codés qui est ensuite modulée en NRZI, l'appareil comprenant:

un moyen servant à coder les données binaires afin de produire des chiffres binaires codés en traitant chaque segment d'un premier nombre prédéterminé de chiffres successifs desdites données binaires comme une unité et en transformant chaque dite unité en un deuxième nombre prédéterminé de chiffres binaires codés de sorte que la longueur de course minimale de la forme d'onde d'un signal obtenu dans le cas où les chiffres binaires codés sont modulés en NRZI soit plus grande que celle de la forme d'onde d'un signal obtenu dans le cas où les données binaires sont modulées en NRZI; et

un moyen servant à moduler en NRZI la séquence produite de chiffres binaires codés; caractérisé par:

un moyen servant à concevoir lesdits chiffres binaires codés afin de former une séquence de blocs de chiffres binaires, constitués chacun de plusieurs chiffres binaires codés, avec un intervalle correspondant à un troisième nombre prédéterminé de chiffres binaires entre deux successifs desdits blocs de chiffres binaires;

un moyen (11) générateur de code redondant servant à produire divers codes redondants, constitués chacun dudit troisième nombre prédéterminé de chiffres binaires, et à produire l'un desdits codes redondants, lequel doit être inséré dans ledit intervalle de la séquence de blocs de chiffres binaires, ledit code particulier étant choisi au moins en fonction du contenu dudit bloc de chiffres binaires précédant immédiatement ledit code redondant et de façon à ne pas réduire la longueur de course minimale de la forme d'onde d'un signal obtenu par modulation NRZI de la séquence complétée de blocs de chiffres binaires où ledit code redondant particulier est inséré, par comparaison avec la longueur de course minimale de la forme d'onde d'un signal obtenu par modulation NRZI des chiffres binaires codés en l'absence dudit code redondant particulier; et

un moyen d'addition (4) servant à insérer ledit code redondant particulier dans ledit intervalle de la séquence de blocs de chiffres binaires afin de produire ladite séquence complétée de chiffres binaires codés, si bien que la composante de courant continu de la forme d'onde d'un signal obtenu par modulation NRZI de ladite séquence complétée de chiffres binaires codés subit au moins une réduction.

**Patentansprüche**

1. Verfahren zum Codieren von Binärdaten zur Erzeugung einer Folge von codierten Binärziffern, die dann NRZI-moduliert wird, umfassend folgende Schritte:

Codieren der Binärdaten (Fig. 1(a)) zur Erzeugung der codierten Binärziffern (Fig. 1(b)) durch Behandeln jedes Segments einer ersten bestimmten Anzahl von aufeinanderfolgenden Ziffern der Binärdaten als eine Einheit und durch Umsetzen jeder derartigen Einheit in eine zweite bestimmte Anzahl von codierten Binärziffern, derart, daß die minimale Run-Länge im Signalverlauf eines Signals, das erhalten wird, wenn die codierten Binärziffern, NRZI-moduliert sind, größer ist als die im Signalverlauf, eines Signals, das erhalten wird, wenn die Binärdaten NRZI-moduliert sind; und NRZI-Modulation der erzeugten Folge der codierten Binärziffern,

dadurch gekennzeichnet,

daß die codierten Binärziffern zur Bildung einer Folge von Binärzifferblöcken angeordnet werden, deren jeder mehrere codierte Binärziffern enthält, wobei ein Intervall entsprechend einer dritten bestimmten Anzahl von Binärziffern zwischen jeweils zwei aufeinanderfolgenden Binärzifferblöcken vorgesehen ist,

daß ein redundanter Code (J), der die dritte bestimmte Anzahl von Binärziffern umfaßt, in jedes Intervall in der Folge der Binärziffernblöcke derart eingefügt wird, daß die Folge der codierten Binärziffern vervollständigt ist, wobei der redundante Code abhängig von mindestens dem Inhalt des Binärziffernblocks unmittelbar vor diesem redundanten Code und derart ausgewählt wird, daß die minimale Run-Länge in dem Signalverlauf eines Signals (Fig. 1(e)), das durch NRZI-Modulation der vervollständigten Folge der codierten Binärziffern erhalten ist, nicht verringert ist im Vergleich zu der minimalen Run-Länge im Signalverlauf eines Signals, das durch NRZI-Modulation der codierten Binärziffern ohne den redundanten Code erhalten wird, und daß die Gleichkomponente im Signalverlauf des durch NRZI-Modulation der vervollständigten Folge der codierten Binärziffern erhaltenen Signals zumindest dann verringert ist, wenn der redundante Code in das Intervall eingefügt ist.

2. Verfahren nach Anspruch 1, bei dem die Codierung die Behandlung jeweils dreier Ziffern der Binärdaten als eine Einheit und die Umsetzung jeder derartigen Einheit in sechs codierte Binärziffern umfaßt.

3. Verfahren nach Anspruch 2, bei dem die minimale Run-Länge 1,5 T beträgt, wobei T die Zykluszeit zweier Binärziffern der codierten Binärziffern bedeutet, und wobei die dritte bestimmte Anzahl drei beträgt.

4. Verfahren nach Anspruch 3, bei dem der redundante Code 100, 001 oder 010 ist, wenn die letzten beiden Binärziffern des dem redundanten Code ummittelbar vorangehenden Blocks 00, 01 oder 10 sind,

bei dem die Pegelinversion in dem redundanten Code zumindest zur Verminderung der Gleichkomponente erforderlich ist,

und bei dem der redundante Code 000 ist, wenn die Pegelinversion im redundanten Code nicht erforderlich ist.

5. Verfahren nach Anspruch 2, bei dem die minimale Run-Länge 1,5 T beträgt, wobei T die Zykluszeit zweier Binärziffern der codierten Binärziffern bedeutet, die maximale Run-Länge 4,5 T beträgt und die dritte bestimmte Anzahl sechs beträgt.

6. Vorrichtung zum Codieren von Binärdaten zur Erzeugung einer Folge von codierten Binärziffern, die dann NRZI-moduliert wird,

mit Einrichtungen (2) zum Codieren der Binärdaten zur Erzeugung von codierten Binärziffern durch Behandlung jedes Segments einer ersten bestimmten Anzahl von aufeinanderfolgenden Ziffern der Binärdaten als eine Einheit und durch Umsetzen jeder derartigen Einheit in eine zweite bestimmte Anzahl von codierten Binärziffern, derart, daß die minimale Run-Länge im Signalverlauf eines Signals, das erhalten wird, wenn die codierten Binärziffern NRZI-moduliert sind, größer ist als die im Signalverlauf eines Signals, das erhalten wird, wenn die Binärdaten NRZI-moduliert sind,

und mit Einrichtungen zur NRZI-Modulation der erzeugten Folge von codierten Binärziffern, gekennzeichnet durch

eine Einrichtung zum Anordnen der codierten Binärziffern unter Bildung einer Folge von Binärzifferblöcken, deren jeder aus mehreren codierten Binärziffern besteht, wobei zwischen jeweils zwei aufeinanderfolgenden Binärzifferblöcken ein einer dritten bestimmten Anzahl von Binärziffern entsprechendes Intervall vorgesehen ist, einen Generator (11) redundanter Codes, der verschiedene redundante Codes erzeugt, deren jeder aus der dritten bestimmten Anzahl von Binärziffern besteht, und zum Vorsehen eines der redundanten Codes abgibt, der in das Intervall in der Folge von Binärzifferblöcken einzufügen ist, wobei dieser eine der redundanten Codes abhängig von zumindest dem Inhalt des Binärzifferblockes, der dem redundanten Code unmittelbar vorangeht, und so ausgewählt ist, daß die minimale Run-Länge im Signalverlauf eines Signals, das durch NRZI-Modulation der vervollständigten Folge der Binärzifferblöcke mit dem eingefügten einen redundanten Code erhalten wird, im Vergleich zu der minimalen Run-Länge im Signalverlauf eines Signals nicht vermindert ist, das durch NRZI-Modulationder codierten Binärziffern ohne den einen redundanten Code erhalten wird, und

eine Addiereinrichtung (4) die den diesen einen der redundanten Codes in das Intervall in der Folge der Binärzifferblöcke zur Erzeugung der vervollständigten Folge von codierten Binärziffern einfügt, wobei die Gleichkomponente im Signalverlauf eines durch NRZI-Modulation der vervollständigten Folge der codierten Binärziffern erhaltenen Signals zumindest vermindert ist.

FIG.1

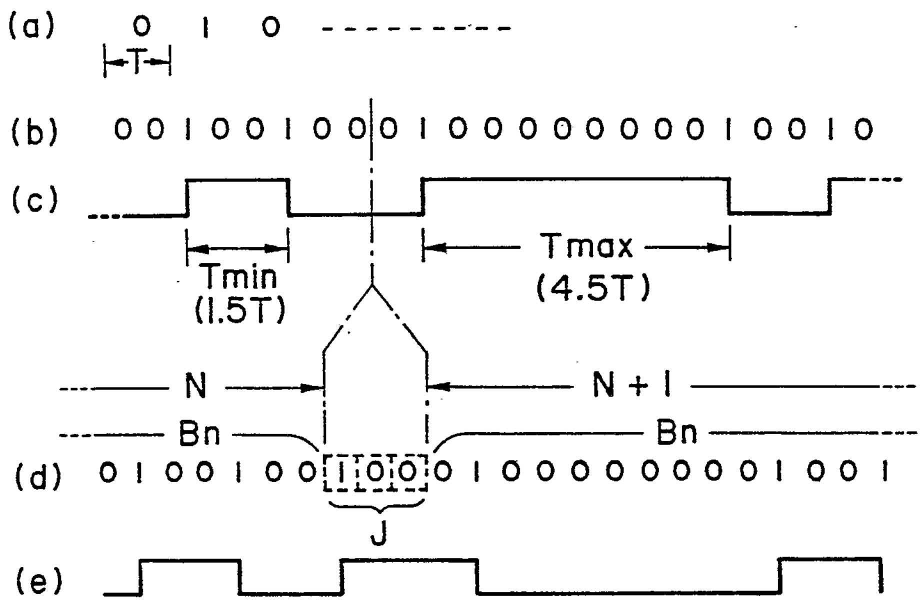


FIG.2

| | ADVANCED 2 BITS F | REDUNDANT CODE J |
|---|---|---|
| INVERSION IS REQUIRED | 0 0 | 1 0 0 |
| | 0 1 | 0 0 1 |
| | 1 0 | 0 1 0 |
| INVERSION IS NOT REQUIRED | 0 0 | 0 0 0 |
| | 0 1 | 0 0 0 |
| | 1 0 | 0 0 0 |

FIG. 3

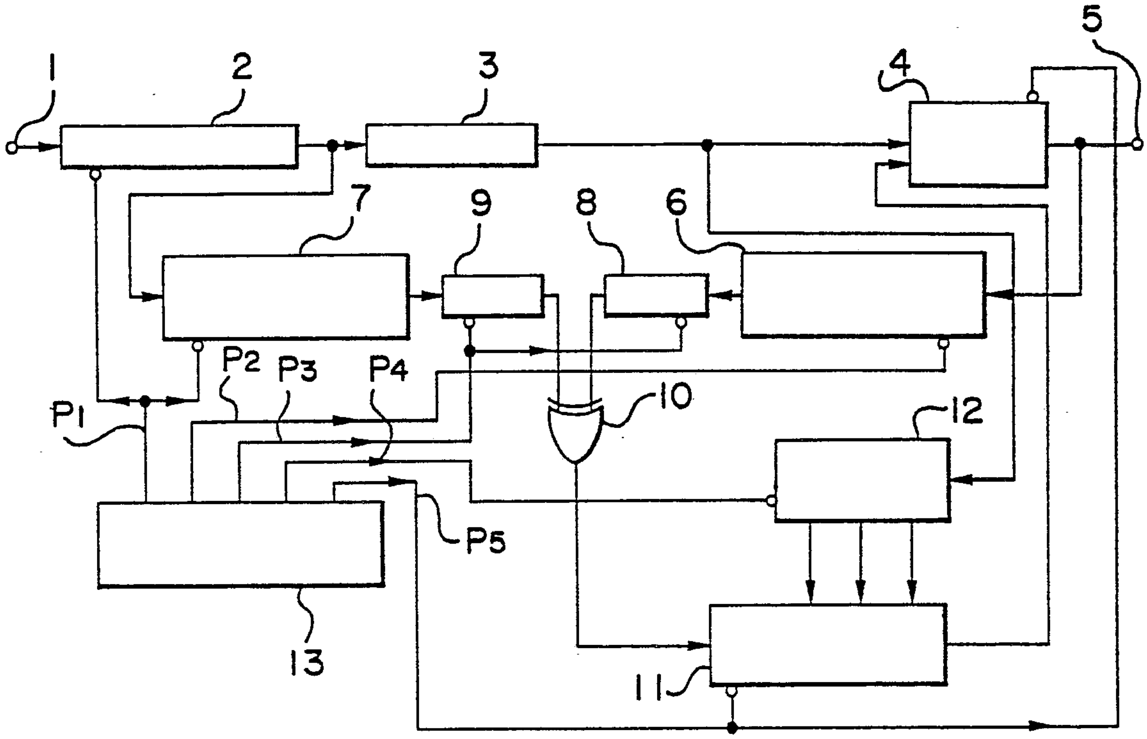
1
2
3
4
5
7
9
8
6
P1
P2
P3
P4
10
12
P5
13
11

FIG. 4

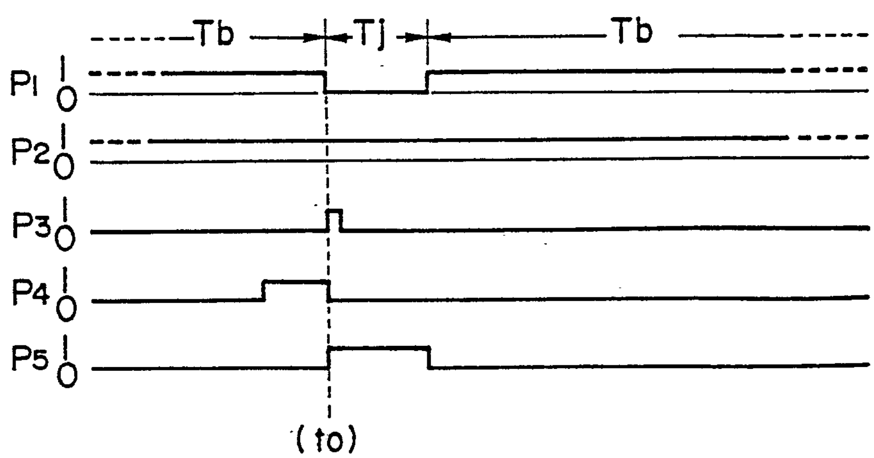
Tb
Tj
Tb
P1 1 0
P2 1 0
P3 1 0
P4 1 0
P5 1 0
(to)